# EUROPEAN PATENT APPLICATION

(11) **EP 2 604 871 A2**
(43) Date of publication of application: **19.06.2013**
(21) Application number: 12196362.3
(22) Date of filing: 10.12.2012
(51) Int. Cl.: F16B 37/06

(54) **Self-piercing nut**

(30) Priority: 12.12.2011 JP 2011270901
(71) Applicant: Pias Sales Co., Ltd., Osaka (JP)
(72) Inventor: Shinjo, Hiroshi, Nishinari-ku, Osaka (JP)
(74) Representative: Price, Paul Anthony King

(57) **Abstract**

A self-piercing nut 1 is configured in that a pilot portion 4 functions as a punch and an end face 5 punches out a metal plate 11. The pilot portion 4 is disposed in a protruding fashion at the center of a nut body 2 which includes a screw-hole 3. A fastening seat face 6 extends from the base of pilot portion 4 to the outer periphery of nut body 2, and the periphery of the end face 5 of pilot portion 4 is formed in circular shape. Outer periphery surface 7 of pilot portion 4 comprises 6 to 12 planar surfaces 8 and is also formed into a polygonal cone-like polyhedron gradually decreasing in diameter from end face 5 toward the base, and fastening seat face 6 is formed into a smooth surface without grooves or concave and convex portions. A protrusion 9 rises from fastening seat face 6 and is disposed near the base of pilot portion 4, and planar surfaces 8 are connected to protrusion 9.

## Description

### [Field of the Invention]

The present invention relates to a self-piecing nut which may be driven into a metal plate and fixed thereon in a caulking fashion with a nut body having a pilot portion functioning as a punch for punching out the metal plate. The self-piercing nut may be used for a high tensile steel plate or common steel thick plate.

### [Background Art]

Self-piercing nuts have been conventionally employed in large quantities in the automobile industry and for assembling household electrical appliances. When a self-piercing nut is fixed on a metal plate, it is required to have a predetermined rotational drag and pull-out drag. In order to meet the requirement, various types of self-piercing nuts have been made available one after another. A conventional self-piercing nut is generally used for a common steel plate, and an outer periphery surface of the pilot portion that punches out a metal plate for assuring a rotational drag is formed to have multiple surfaces such as square and hexagonal surfaces, and many concave-convex (knurled) portions are disposed on the outer periphery surface. On the other hand, a protrusion is disposed at a hole periphery of the punching die which punches out a metal plate in cooperation with the pilot portion, and the protrusion is press-fitted into the opening periphery of the punched-out metal plate. Then the opening periphery is deformed and tightly contacted on the outer periphery surface of the pilot portion, thereby obtaining a rotational drag and pull-out drag. Also proposed is a self-piercing nut such that a polygonal concave groove is disposed on a fastening seat surface extending from the base of the pilot portion to the outer periphery of the nut body, and a convex portion is disposed at a bottom of the concave groove, and the opening periphery of the metal plate punched out by the pilot portion is press-fitted and deformed in the concave groove by means of the protrusion of the die, thereby obtaining a rotational drag and pull-out drag.

The above-mentioned self-piercing nut is usually manufactured by quenching and hardening the whole thereof after pressure molding by using common steel. Therefore, from the hardness viewpoint of the piercing nut itself, it is often used for a metal plate whose thickness is about 1.4mm or less in the case of common steel plate material.

A self-piercing nut for thick plate also usable for thick plate (common steel) of 1.4mm or over in thickness is proposed by the inventor et al as in Patent document 1 (JPH2 - 52125) and it has been already materialized.

Fig. 16 shows self-piercing nut 31 mentioned in Patent document 1, and Fig. 17 is an explanatory diagram of the process of fixing the self-piercing nut 31 on metal plate 32.

Self-piercing nut 31 is substantially circular in shape with respect to the periphery of end face 35 of pilot portion 34 that functions as a punch for punching out metal plate 32, and thereby it is possible to use punching die 40 for making a hole having a circular section. Also, opening periphery 33 of metal plate 32 punched out by the cooperative operation of pilot portion 34 and punching die 40 is press-fitted into annular groove 37 disposed at the outer base periphery of pilot portion 34 by means of protrusion 41 disposed at the hole periphery of punching die 40, and it is also fitted into concave grooves or recesses 36 disposed at the outer periphery surface of pilot portion 34 in order to secure self-piercing nut 31 on metal plate 32, thereby obtaining a rotational drag and pull-out drag.

Recently, however, particularly in the automobile industry, from the viewpoint of energy saving, there is a tendency to use a high tensile steel plate in order to reduce the weight by decreasing plate thickness. Also in the case of using common steel, there is a tendency to use thick plate material of 3.0mm to 12.0mm in thickness from of the point of enhancing the safety.

When above-mentioned self-piercing nut 31 is used for such high tensile steel plate or common steel thick plate material (3.0mm to 12.0mm in thickness), it is difficult to press-fit and deform opening periphery 33 of metal plate 32 punched out by pilot portion 34 into annular groove 37 and concave grooves 36. Moreover, the load on protrusion 41 of punching die 40 becomes too much increased, extremely shortening the life of punching die 40. As a result, there arise many problems such as generation of defective products and suspension of the production for die replacement, causing the cost to increase.

### [Summary of the Invention]

It would be desirable to provide a self-piercing nut usable for a high tensile steel plate and common steel thick plate (3.0mm to 12.0mm in thickness). Aspects of the present invention will now be described.

An aspect of the present invention provides a self-piercing nut configured in that pilot portion functioning as a punch of which end face serves to punch out metal plate is disposed in a protruding fashion at a center of nut body including screw-hole, an outer periphery surface of the pilot portion is formed with a taper gradually decreasing in diameter from the end face toward a base thereof, and its transverse section shape is formed in non-circular shape, also comprising fastening seat face extending from the base of the pilot portion to the outer periphery of the nut body,
wherein a periphery of the end face of the pilot portion is formed in circular shape, and outer periphery surface of the pilot portion comprises plane surfaces having 6 to 12 surfaces and is also formed into a polygonal cone-like polyhedron gradually decreasing in diameter from the end face toward the base,
the fastening seat face is formed into a flat surface without grooves, concave and convex portions,
a protrusion rising from the fastening seat face is disposed near the base of the pilot portion, and
the plane surfaces having 6 to 12 surfaces are connected with the protrusion.

An aspect of the present invention provides a self-piercing nut configured in that a pilot portion whose end face functions as a punch for punching out a metal plate is disposed in a protruding fashion at the center of the nut body including the screw hole, the outer periphery surface of the pilot portion is formed with a taper gradually decreasing in diameter from the end face toward the base, and the traverse section shape is non-circular, and it is also formed with a fastening seat face extending from the base of the pilot portion to the outer periphery of the nut body, wherein the end face periphery of the pilot portion is formed circular, and the outer periphery surface of the pilot portion comprises 6 to 12 plane surfaces, and also, it is shaped into a polyhedron having a polygonal cone shape (tapered shaped) that gradually decreases in diameter toward the base, the fastening seat face is formed into a flat surface without grooves, concave and convex portions, there is provided a protrusion rising from the fastening seat face in the vicinity of the base of the pilot portion, and the 6 to 12 plane surfaces are connected with the protrusion.

In a preferred embodiment, the protrusion has a sloped surface at an angle of 30 deg to 60 deg toward the pilot portion with respect to the fastening seat face.

In a preferred embodiment, the protrusion is annularly formed at the outer base periphery of the pilot portion.

In a preferred embodiment, the fastening seat face is formed on a sloped surface that gradually increases in height from the outer periphery of the nut body toward the base of the pilot portion.

In a preferred embodiment, the height (H) of the pilot portion is set lower than plate thickness (T) of the metal plate.

In a preferred embodiment, the outer periphery surface of the nut body is hexagonal or square with corners cut off.

In a preferred embodiment, the whole including the nut body and the pilot portion is quenched and hardened.

In an aspect of the present invention, the self-piercing nut is configured in that the end face periphery of the pilot portion for punching out a metal plate is formed circular in shape, and the outer periphery surface of the pilot portion comprises 6 to 12 plane surfaces and is formed into a polyhedron having a polygonal cone shape gradually decreasing in diameter from the end face toward the base, and the fastening seat face is formed into a flat or smooth surface without grooves, concave and convex portions. There is provided a protrusion rising from the fastening seat face in the vicinity of the base of the pilot portion, and because the 6 to 12 plane surfaces are connected with the protrusion, the opening periphery of the metal plate punched out by the pilot portion cooperating with a punching die is pressed against the protrusion by the end face of the punching die. As a result, the opening periphery is press-fitted and deformed by the protrusion and is contacted on the protrusion and is also fixed on the metal plate on each plane surface of the 6 to 12 surfaces in a tight-contact caulking fashion, thereby obtaining a sufficient rotational drag and pull-out drag. In addition, the punching die has a plane upper surface the same as an ordinary punching die, having a simple structure with a circular hole in which the circular end face of the pilot portion is inserted, and unlike the conventional method, there is no need of disposing a protrusion at the upper surface of a hole periphery, making it possible to greatly enhance the life of the die. Also, it becomes possible for the punching die to press the opening periphery of the metal plate against the protrusion and fastening seat face with a high pressure by means of the flat upper surface thereof, enabling its secure and reliable fixing on a metal plate such as a high tensile steel plate or common steel plate material (3.0mm to 12.0mm in thickness) in cooperation with the pilot portion.

When the protrusion has a sloped surface at an angle of 30 deg to 60 deg with respect to the fastening seat face, it enables the reliable and effective execution of press-fitting and deforming of the opening periphery of the metal plate by the protrusion, thereby increasing a rotational drag and pull-out drag with respect to the metal plate.

When the protrusion is annularly formed at the outer base periphery of the pilot portion, it enables uniform press-fitting and deforming of the opening periphery of the meal plate by the protrusion, thereby obtaining a more stable rotational drag and pull-out drag with respect to the metal plate.

When the fastening seat face is formed on a sloped surface gradually incasing in height from the outer periphery of the nut body toward the base of the pilot portion, and when the opening periphery of the metal plate punched out by the pilot portion is pressed against the protrusion and fastening seat face by means of a flat end face of the punching die, the opening periphery of the metal plate is forced to move to the outer periphery side of the pilot portion along the sloped fastening seat face, enabling the effective execution of press-fitting and deforming of the opening periphery by the protrusion, thereby obtaining a greater rotational drag and pull-out drag with respect to the metal plate.

### [Brief Description of the Drawings]

Fig. 1 is a perspective view of a self-piercing nut in the exemplary embodiment 1 of the present invention.
Fig. 2 is a partly longitudinal front view of the self-piercing nut in the exemplary embodiment 1.
Fig. 3 is a plan view of the self-piercing nut in the exemplary embodiment 1.
Fig. 4 is a view along the line 4 - 4 of Fig. 3.
Fig. 5 is an explanatory diagram of a process of fixing the self-piercing nut on a metal plate in the exemplary embodiment 1.
Fig. 6 is an explanatory diagram of a process of fixing the self-piercing nut on a metal plate in the exemplary embodiment 1.
Fig. 7 is an explanatory diagram of a process of fixing the self-piercing nut on a metal plate in the exemplary embodiment 1.
Fig. 8 is an explanatory diagram of a process of fixing the self-piercing nut on a metal plate in the exemplary embodiment 1.
Fig. 9 is a partly longitudinal front view of a self-piercing nut in the exemplary embodiment 2 of the present invention.
Fig. 10 is a plan view of the self-piercing nut in the exemplary embodiment 2.
Fig. 11 is a view along the line 11 - 11 of Fig. 10.
Fig. 12 is an explanatory diagram showing a process of fixing the self-piercing nut on a metal plate in the exemplary embodiment 2.
Fig. 13 is an explanatory diagram showing a process of fixing the self-piercing nut on a metal plate in the exemplary embodiment 2.
Fig. 14 is an explanatory diagram showing a process of fixing the self-piercing nut on a metal plate in the exemplary embodiment 2.
Fig. 15 is an explanatory diagram showing a process of fixing the self-piercing nut on a metal plate in the exemplary embodiment 2.

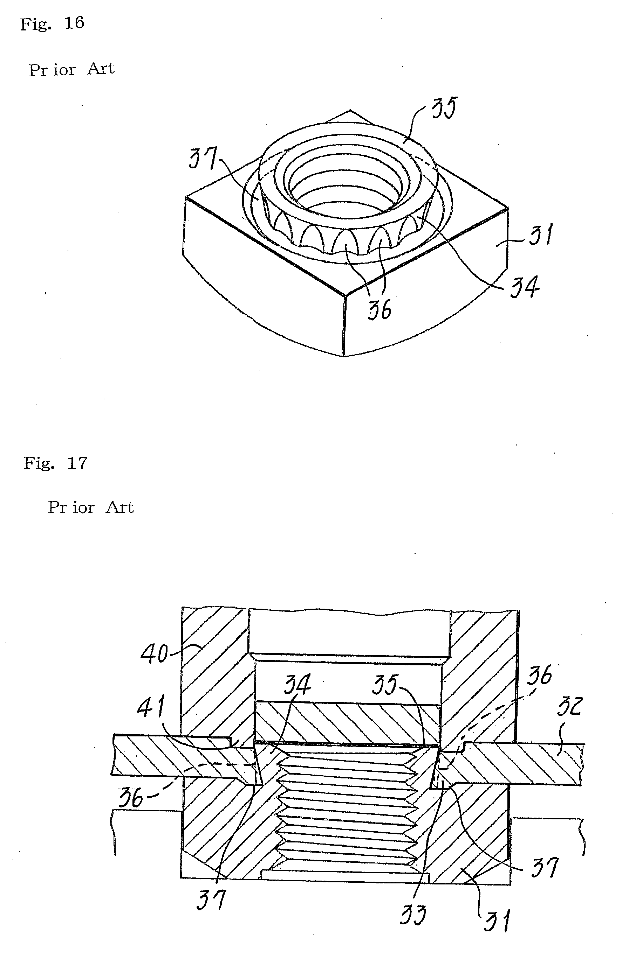

Fig. 16 is a perspective view of a self-piercing nut showing a conventional example.
Fig. 17 is an explanatory diagram of a process of fixing a self-piercing nut of the conventional example.

### [Description of the Preferred Embodiments]

The preferred embodiments of the present invention will be described in detail in the following with reference to the drawings.

### [Exemplary embodiment 1]

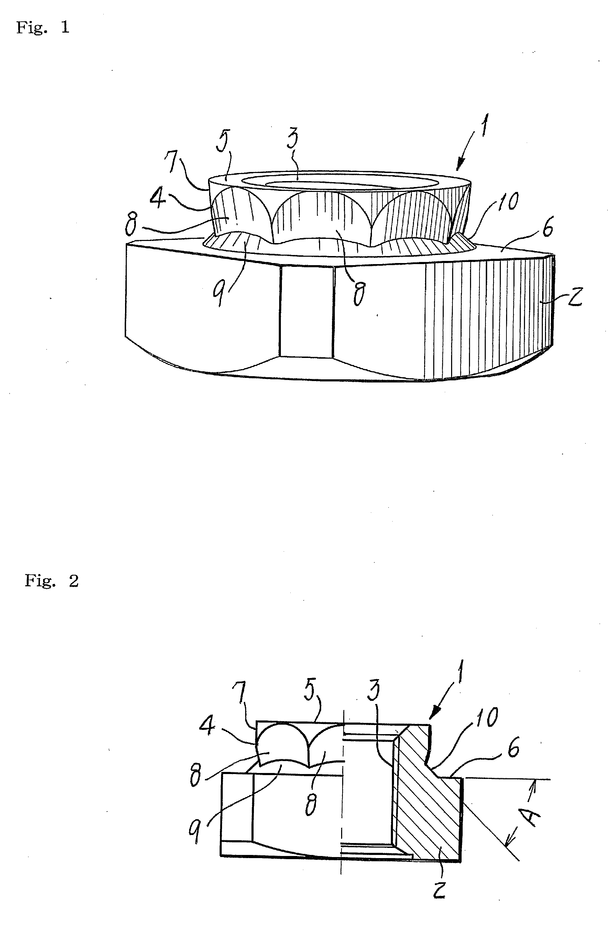

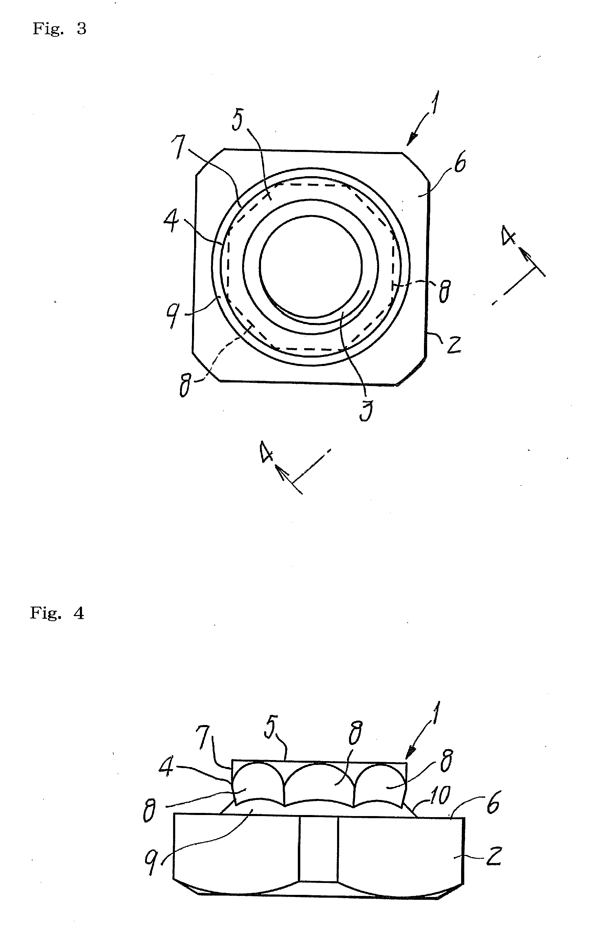

Fig. 1 to Fig. 4 show self-piercing nut 1 in the exemplary embodiment 1 of the present invention. Self-piercing nut 1 is manufactured through cold molding of a common steel material, and nut body 2 is round corner square in shape which is formed by cutting off the four corners of a square nut, and cylindrical pilot portion 4 with end face 5 functioning as a punch for punching out a metal plate is disposed in a protruding fashion at a central portion including screw hole 3 of nut body 2, and there is provided fastening seat face 6 extending from the base of pilot portion 4 to the outer periphery of nut body 2.

Pilot portion 4 is circularly formed with respect to the periphery of end face 5, and its outer periphery surface 7 comprises 6 to 12 (8 in the embodiment shown) planar surfaces 8 and is also formed into a polyhedron having a polygonal cone shape that gradually decreases in diameter from end face 5 towards the base of pilot portion 4.

Fastening seat face 6 is formed flat and perpendicular to the axial line (central axis) of nut body 2, and, unlike a conventional self-piercing nut, it is not provided with groove, concave and convex portions. On the other hand, protrusion 9 rising from fastening seat face 6 is disposed near the base of pilot portion 4. Protrusion 9 is annularly formed at the outer base periphery of pilot portion 4, having sloped surface 10 inclining at a predetermined inclination angle (A) toward outer periphery surface 7 of pilot portion 4 with respect to fastening seat face 6. Inclination angle (A) is preferable to be in a range of 30 deg to 60 deg, and, in the embodiment shown in Fig. 2, inclination angle (A) is set at 45 deg. Also, in the embodiment shown, protrusion 9 is annularly formed at the outer base periphery of pilot portion 4, but it is also allowable to be provided as separate protrusion components at constant intervals spaced apart in the peripheral (circumferential) direction of pilot portion 4. As to self-piercing nut 1 having a configuration described above, the whole of it including nut body 2 and pilot portion 4 is quenched and hardened after completing the process of forming screw-hole 3.

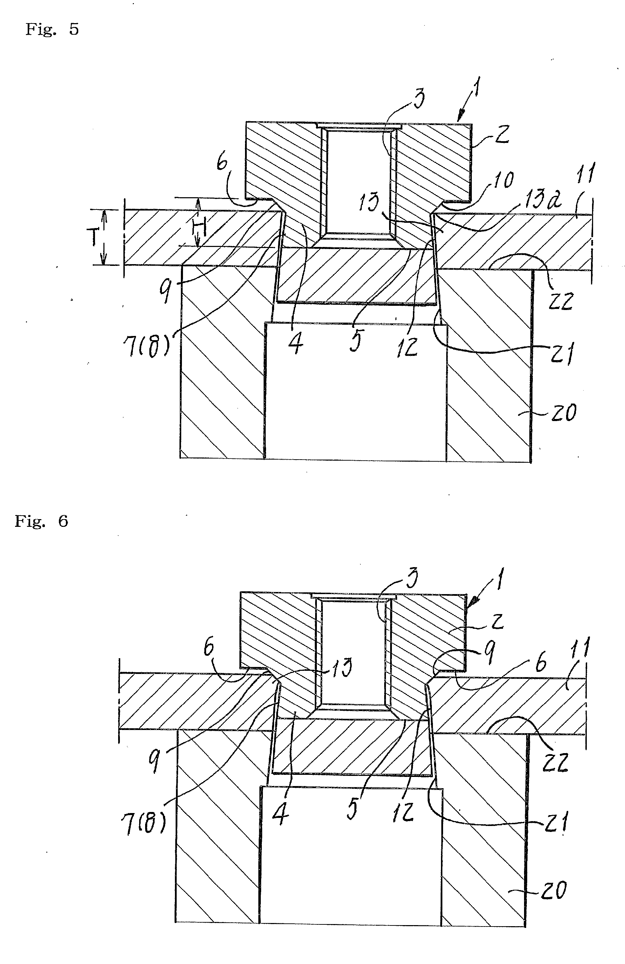

Fig. 5 to Fig. 8 show a process of fixing self-piercing nut 1 in the exemplary embodiment 1 described above on metal plate 11. Self-piercing nut 1 is set at a position coaxial to punching die 20 on metal plate 11 placed on upper surface 22 of punching die 20, and pilot portion 4 of piercing nut 1 is driven into metal plate 11 for the purpose of punching and fixing.

In the case of common steel for metal plate 11, it can be used for a thick plate material whose thickness (T) ranges from 3.0mm to 12.0mm. Also, the punching process by driving pilot portion 4 into the metal plate is substantially ended when the shearing process is completed before piercing the metal plate 11, and, therefore, the height (H) of pilot portion 4 is just enough to be a height necessary for completion of the shearing process, and it is set lower than (less than) plate thickness (T) of metal plate 11. On the other hand, punch hole 21 of punching die 20 is formed into a circular hole having a predetermined clearance with respect to the diameter of circular end face 5 of pilot portion 4. Also, upper surface 22 of punching die 20 is a flat surface the same as for an ordinary punching die, and, unlike the conventional example, no protrusion is disposed on upper surface 22.

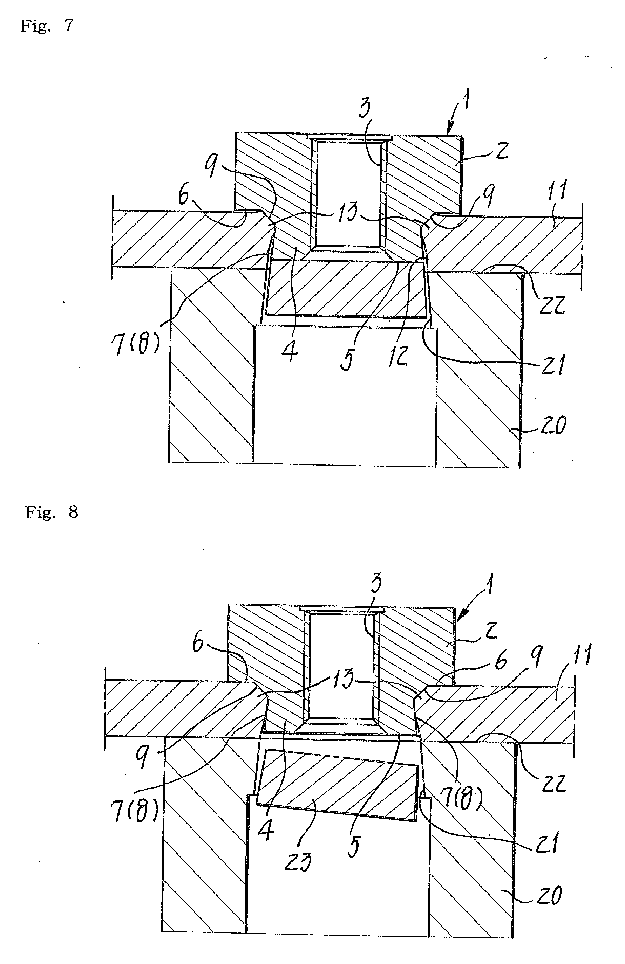

Fig. 5 shows a midway point of a punching process executed by the cooperative operation of pilot portion 4 and punching die 20. The punching process goes on with end face 5 of pilot portion 4 driven into metal plate 11, and end or edge periphery 13a of opening periphery 13 at the back side of metal plate 11 of punched opening 12 is in a state of abutting sloped surface 10 of protrusion 9 of pilot portion 4. As the punching process of pilot portion 4 further goes on, protrusion 9 is press-fitted into opening periphery 13, as shown in Fig. 6. Opening periphery 13 starts to be deformed, and deformed opening periphery 13 comes into tight contact with protrusion 9. Further, as the punching process by pilot portion 4 proceeds, press-fitting and deforming by protrusion 9 become increased with respect to opening periphery 13, as shown in Fig. 7, and opening periphery 13 also comes into tight contact with polyhedral planar surfaces 8 of outer periphery surface 7 of pilot portion 4 which are contiguous with protrusion 9. Further, as the punching process goes on, the back side of metal plate 11 comes into tight contact with fastening seat face 6 of self-piercing nut 1, as shown in Fig. 8. Then shearing in the punching process by pilot portion 4 is completed and the punching process is substantially ended. Slug 23 punched out by pilot portion 4 falls down into punch hole 21 of punching die 20. Also, metal plate 11 is pressed against fastening seat face 6 with a high pressing force generated by flat upper surface 22 of punching die 20, and opening periphery 13 is further increasingly press-fitted and deformed by protrusion 9, causing press-fitted and deformed opening periphery 13 to come into tight contact with protrusion 9 and also with each planar surface 8 of the polygonal cone-like polyhedron, and self-piercing nut 1 is fixed on metal plate 11, thereby obtaining a sufficient rotational drag (resistance to rotation) and pull-out drag (resistance to being pulled-out).

### [Exemplary embodiment 2]

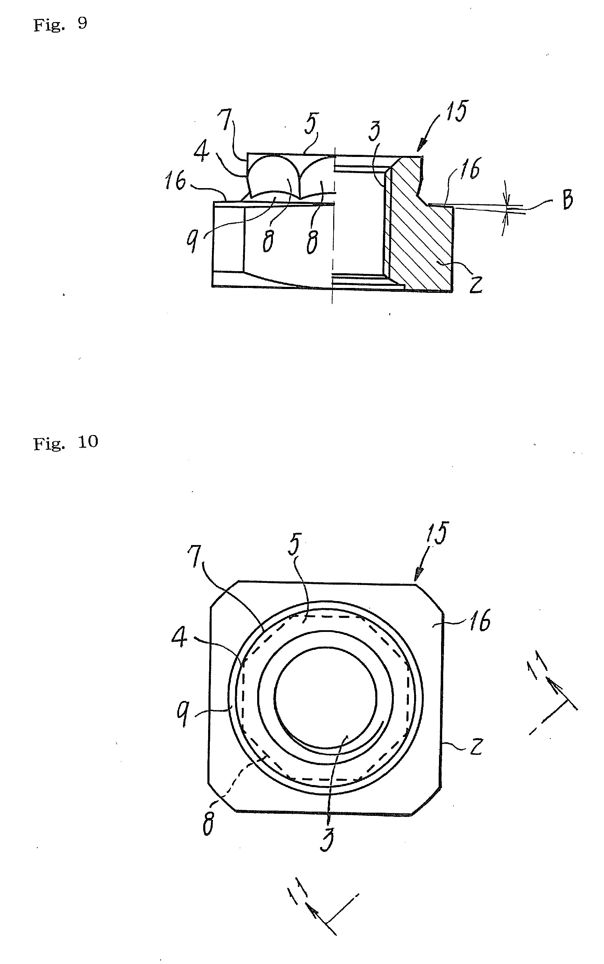

Shown in Fig. 9 to Fig. 11 is self-piercing nut 15 in the exemplary embodiment 2 of the present invention. Self-piercing nut 15 is basically same in configuration as self-piercing nut 1 in the exemplary embodiment 1. Therefore, those features same in configuration will be given same reference numerals, and the description is omitted. The difference in configuration from self-piercing nut 1 will be described in the following.

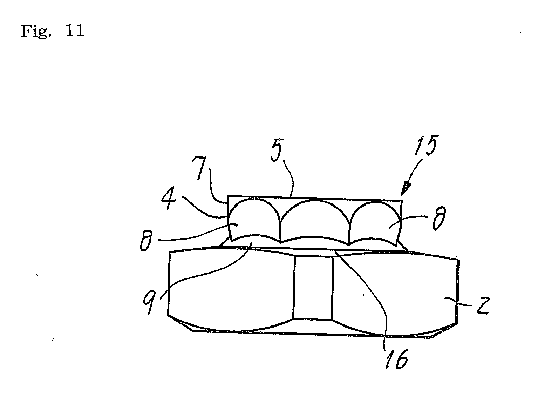

Fastening seat face 6 of self-piercing nut 1 in the exemplary embodiment 1 is formed into a flat surface perpendicular to the axial line (central axis) of nut body 2, as shown in Fig. 2. On the other hand, fastening seat face 16 of self-piercing nut 15 in the exemplary embodiment 2 is sloped so as to gradually increase in height from the outer periphery of nut body 2 toward the base of pilot portion 4, as clearly shown in Fig. 9 and Fig. 11. The inclination angle (B) to the plane surface perpendicular to the axial line of nut body 2 is preferable to be in a range from 5 deg to 7 deg.

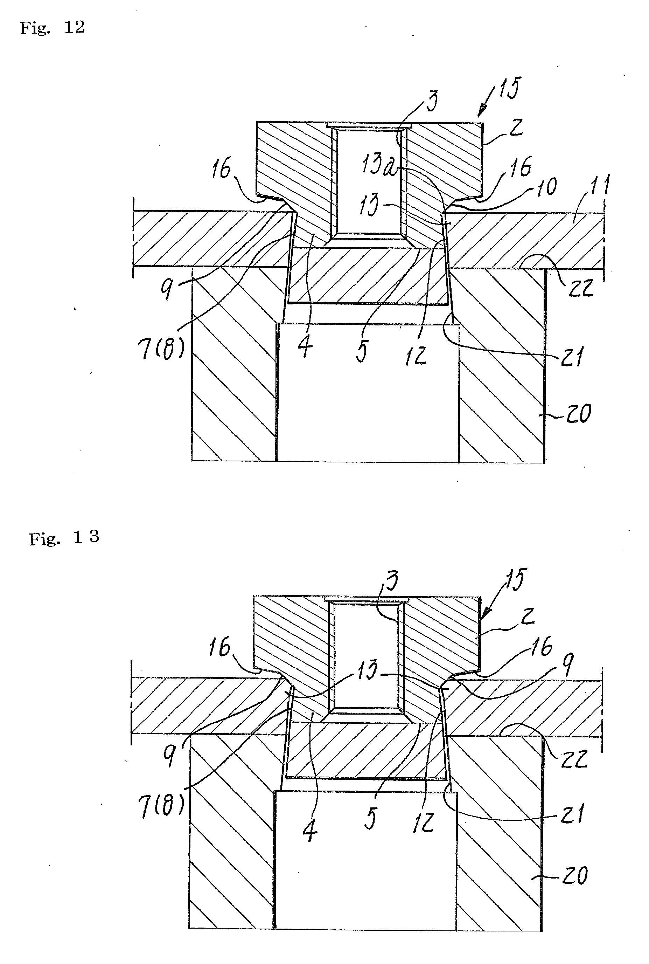

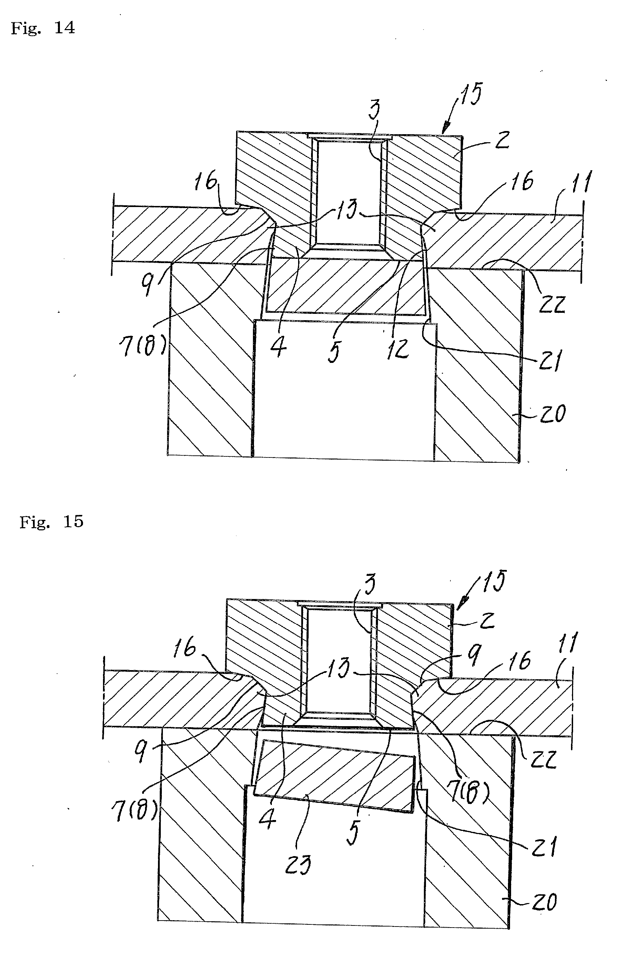

Shown in Fig. 12 to Fig. 15 is a process of fixing self-piercing nut 15 in the exemplary embodiment 2 on metal plate 11. Self-piercing nut 15 is set at a position coaxial to punching die 20 on metal plate 11 placed on the upper surface of punching die 20, and pilot portion 4 of self-piercing nut 15 is driven into metal plate 11 for the purpose of punching process, the same as in the exemplary embodiment 1. With end face 5 of pilot portion 4 driven into metal plate 11, the punching process goes on in cooperation with punching die 20, and end or edge periphery 13a of opening periphery 13 at the back side of metal plate 11 of punched opening 12 abuts sloped surface 10 of protrusion 9 of pilot portion 4. Opening periphery 13 is subjected to press-fitting and deforming by protrusion 9, coming into tight contact with protrusion 9 and also with planar surfaces 8 of the polygonal cone-like polyhedron of outer periphery surface 7 of pilot portion 4 as shown in Fig. 12 to Fig. 14, which is common to the process shown in Fig. 5 to Fig. 7 of the exemplary embodiment 1. However, as the punching process further goes on, as shown in Fig. 15, the back side of metal plate 11 comes into tight contact with the slope of fastening seat face 16 of self-piercing nut 15, and opening periphery 13 of metal plate 11 is pressed by flat upper surface 22 of punching die 20 and is forced to move toward the outer periphery surface side of pilot portion 4 along the slope of fastening seat face 16. Thus, press-fitting and deforming of opening periphery 13 by means of protrusion 9 is effectively performed, obtaining a greater rotational drag and pull-out drag with respect to metal plate 11.

In the exemplary embodiment 1 and exemplary embodiment 2 described above, the example of using self-piercing nut 1, 15 of the present invention for common steel thick plate material has been described, but it is also possible to use self-piercing nut of the present invention for a high tensile steel plate greater in strength.

Also, as to the outline shape of nut body 2, it is allowable to use a hexagonal shape and the like as needed in addition to a round corner square shape or the like as shown.

### [Description of the Reference Numerals and Signs]

- 1, 15: Self-piercing nut
- 2: Nut body
- 3: Screw-hole
- 4: Pilot portion
- 5: End face
- 6, 16: Fastening seat face
- 7: Outer periphery surface of pilot portion 4
- 8: Plane surface
- 9: Protrusion
- 10: Sloped surface
- 11: Metal plate
- 12: Opening
- 13: Opening periphery
- 13a: End periphery
- 20: Punching die
- 21: Punch hole
- 22: Upper surface

## Claims

1. A self-piercing nut (1) comprising:
a nut body (2) having a screw-hole (3) and;
a pilot portion (4) for functioning as a punch and having an end face (5) for punching out a metal plate (11), the pilot portion (4) protruding from a center of the nut body (2);
wherein a periphery of the end face (5) of the pilot portion (4) is formed in a circular shape,
an outer periphery surface (7) of the pilot portion (4) comprises 6 to 12 planar surfaces (8) and is also formed into a polygonal cone-like polyhedron gradually decreasing in diameter from the end face (5) toward a base of the pilot portion (4),
a fastening seat face (6) extending from the base of the pilot portion (4) to the outer periphery of the nut body (2) is formed as a generally smooth surface,
a protrusion (9) rising from the fastening seat face (6) is disposed near the base of the pilot portion (4), and
the planar surfaces (8) are connected to the protrusion (9).

2. The self-piercing nut of claim 1, wherein the protrusion (9) has a sloped surface (10) inclining at an angle of 30 deg to 60 deg toward outer periphery surface (7) of the pilot portion (4) with respect to the fastening seat face (6).

3. The self-piercing nut of claim 1 or claim 2, wherein the protrusion (9) is formed in annular shape at an outer base periphery of the pilot portion (4).

4. The self-piercing nut of any one of claim 1 to claim 3, wherein the fastening seat face (16) is formed with a sloped surface gradually increasing in height from an outer periphery of the nut body (2) toward the base of the pilot portion (4).

5. The self-piercing nut of any one of claim 1 to claim 4, wherein height (H) of the pilot portion (4) is less than plate thickness (T) of the metal plate (11).

6. The self-piercing nut of any one of claim 1 to claim 5, wherein an outer periphery surface of the nut body (2) is hexagonal or square with corners cut off.

7. The self-piercing nut of any one of claim 1 to claim 6, wherein the whole thereof including the nut body (2) and the pilot portion (4) has been quenched and hardened.
